# EUROPÄISCHE PATENTANMELDUNG

(11) **EP 3 260 823 A1**
(43) Veröffentlichungstag der Anmeldung: **27.12.2017**
(21) Anmeldenummer: 16176081.4
(22) Anmeldetag: 24.06.2016
(51) Int. Cl.: G01F 23/24, G01F 23/26

(54) **SENSORANORDNUNG ZUR POTENTIOMETRISCHEN MESSUNG EINER FÜLLSTANDSHÖHE IN EINEM BEHÄLTER**

(71) Anmelder: BAUMER ELECTRIC AG, 8500 Frauenfeld (CH)
(72) Erfinder: Fend, Peter, 8574 Lengwil (CH); Brändle, Daniel, 8500 Frauenfeld (CH); Tiedeke, Joachim, 8280 Kreuzlingen (CH)
(74) Vertreter: Strauss, Steffen

(57) **Zusammenfassung**

Gezeigt ist eine Sensoranordnung (1) zur potentiometrischen Messung einer Füllstandshöhe (2) in einem Behälter (3), umfassend eine Oszillatoranordnung (5) zur Erzeugung einer Wechselspannung und eine mit der Oszillatoranordnung (5) verbundene, in den Behälter (3) einbringbar ausgestaltete Elektrode (4), wobei die Oszillatoranordnung (5) zumindest teilweise in einem Innenraum (15) der Elektrode (4) angeordnet ist. Dadurch sind parasitäre Kapazitäten minimiert und Messungen an elektrisch kaum oder nicht leitenden Flüssigkeiten, die eine geringe Dielektrizitätskonstante haben, auch bei niedrigen Füllständen möglich.

## Beschreibung

Die Erfindung betrifft eine Sensoranordnung zur potentiometrischen Messung einer Füllstandshöhe in einem Behälter.

Solche Sensoranordnungen sind schon seit langem bekannt und dienen zum Beispiel zur Messung von Behälterinhalten in der chemischen Industrie oder in der Lebensmittelindustrie. Bei diesem Messprinzip wird das Verhältnis der Spannung zwischen einem Elektrodenende und der Behälterwand oder der Gegenelektrode zu der zwischen beiden Elektrodenenden eingespeisten Spannung gemessen. Voraussetzung hierfür ist eine zumindest geringe Leitfähigkeit des Füllguts.

Wird mit einer Wechselspannung ausreichend hoher Frequenz gearbeitet, lässt sich rein physikalisch das besagte potentiometrische Messverfahren auch über das dielektrische Verhalten des Füllgutes, also mit Wirkung seiner elektrischen Kapazität, realisieren.

Nachteilig ist jedoch, dass die Oszillatoranordnung, die die Wechselspannung erzeugt, eine gewisse parasitäre Kapazität zur Elektrodenanordnung aufweist und aufgrund praktisch immer vorhandener Unsymmetrien einen Gleichtaktanteil der Wechselspannung in die Messspannung überkoppelt. Bei Messungen an Füllgütern, die eine geringe Dielektrizitätskonstante und damit eine geringe Kapazität aufweisen, wird die Messung sehr ungenau, da die parasitäre Kapazität der Oszillatoranordnung mit der Kapazität des Füllgutes vergleichbar wird und der Fehler daher vor allem bei sinkendem Füllstand sehr stark zunimmt. Des Weiteren wirken parasitäre Kapazitäten, wie sie z. B. durch Abschirmmaßnahmen entstehen, belastend auf das Messsignal. Neben den parasitären kapazitiven Effekten können auch induktive Störungen in das Messsignal einkoppeln, insbesondere bei Verwendung von induktiven Bauteilen

Aufgabe der Erfindung ist es, eine Lösung bereitzustellen, mit der Füllgut mit einer geringen Dielektrizitätskonstante, welches praktisch elektrisch nicht leitend ist, wie z. B. reine Alkohole oder Öle, zuverlässig gemessen werden kann, insbesondere auch bei niedrigen Füllständen.

Erfindungsgemäß wird dies gelöst durch eine Sensoranordnung zur potentiometrischen Messung einer Füllstandshöhe in einem Behälter, umfassend eine Oszillatoranordnung zur Erzeugung einer Wechselspannung und eine mit der Oszillatoranordnung verbundene, in den Behälter einbringbar ausgestaltete Elektrode, wobei die Oszillatoranordnung zumindest teilweise in einem Innenraum der Elektrode angeordnet ist.

Durch die Anordnung in dem Innenraum der Elektrode sind Teile der Oszillatoranordnung durch die Elektrode abgeschirmt. Weitere Abschirmelemente, die durch parasitäre Kapazitäten das Messsignal belasten, sind daher nicht notwendig. Eine solche Anordnung hat insgesamt eine geringe parasitäre Kapazität, so dass hauptsächlich die Kapazität des Füllgutes gemessen wird, auch wenn dieses eine geringe Dielektrizitätskonstante hat und ein geringer Füllstand vorliegt. Der von dem System aufgrund seiner Kapazität erzeugte Fehler ist folglich klein gegenüber dem Messwert.

Die Erfindung kann mit den folgenden, jeweils für sich vorteilhaften und beliebig miteinander kombinierbaren Weiterentwicklungen und vorteilhaften Ausgestaltungen weiter verbessert werden.

Die Elektrode kann in den Behälter eintauchbar sein. Es kann sich um eine Tauchelektrode handeln, mit der zum Beispiel flüssige Güter gemessen werden können.

Die Oszillatoranordnung kann eine Wechselspannungsquelle umfassen und die Wechselspannungsquelle in dem Innenraum der Elektrode angeordnet sein. Durch die Anordnung in dem Innenraum der Elektrode wird die nötige Abschirmung durch die Elektrode erzielt. Als Wechselspannungsquelle kommen zum Beispiel Schwingkreise oder Prozessoren in Frage.

Die Oszillatoranordnung kann eine Transformatoranordnung umfassen und die Transformatoranordnung in dem Innenraum der Elektrode angeordnet sein. Die Transformatoranordnung kann zur Stromverstärkung eines Wechselspannungssignals dienen, dass von einer Wechselspannungsquelle erzeugt wird. Wieder wird durch die Anordnung in dem Innenraum der Elektrode die nötige Abschirmung durch die Elektrode erzielt.

Um eine möglichst kompakte Ausgestaltung der Transformatoranordnung zu ermöglichen, kann die Transformatoranordnung einen ersten Satz von Windungen und einen zweiten Satz von Windungen umfassen und im ersten Satz die Anzahl der Windungen 1 bis 5 betragen. Dadurch ist es möglich, die Transformatoranordnung im Inneren der Elektrode anzuordnen. Der zweite Satz von Windungen kann eine Anzahl aufweisen, die je nach Eingangsspannung und Ausgangsspannung sehr viel höher ist. Beispielsweise können 5 bis 100 Windungen vorhanden sein.

Die gesamte Oszillatoranordnung kann vollständig in dem Innenraum angeordnet sein, um eine möglichst gute Abschirmung und einen möglichst geringen Fehler bei der Messung zu erzielen.

In einer vorteilhaften Ausgestaltung weist die Sensoranordnung eine Energiesendeanordnung und/oder eine Energieempfangsanordnung zur kontaktlosen Übertragung von Energie auf. Die Energiesendeanordnung und/oder eine Energieempfangsanordnung sind also dazu ausgestaltet, Energie kontaktlos zu übertragen. Dies hat den Vorteil, dass zum einen auf eine Abdichtung von Energie übertragenden Kabeln verzichtet werden kann. Ferner ist die Sensoranordnung an dieser Stelle galvanisch getrennt von anderen Elementen. Insbesondere eine Energieempfangsanordnung kann an oder in der Elektrode angeordnet sein, um beispielsweise in der Elektrode angeordnete Elemente mit Energie versorgen zu können. Die empfangene Energie kann in elektrische Energie umgewandelt werden.

Eine kontaktlose Übertragung von Energie kann beispielsweise durch Licht erfolgen. Die Energieempfangsanordnung und/oder die Energiesendeanordnung können als Dioden, beispielsweise aus Fotodioden oder LEDs ausgestaltet sein. Bei einer anderen Art der Übertragung von Licht kann z. B. ein Laser eingesetzt werden, um größere Mengen an Energie gezielt zu übertragen. In einer weiteren Ausgestaltung kann eine kontaktlose Übertragung beispielsweise induktiv, etwa durch Spulen, erfolgen.

Die Sensoranordnung kann eine Signalsendeanordnung und/oder eine Signalempfangsanordnung zur kontaktlosen Übertragung von Signalen aufweisen. Auch hier kann auf die Übertragung durch feste Elemente, die beim Durchtreten durch eine Hülle der Elektrode abgedichtet werden müssen, verzichtet werden. Ferner sind auch hier die beiden Seiten voneinander galvanisch getrennt. Auch hier können wieder Dioden, etwa Fotodioden und LEDs, ein Laser oder induktive Elemente zur Übertragung eingesetzt werden.

Bei der Übertragung können beispielsweise Rohsignale übertragen werden und eine Auswertung an einer anderen Stelle erfolgen. Es kann eine Amplitude oder eine Phase übertragen werden. Alternativ können schon verarbeitete Signale übertragen werden.

Insbesondere kann eine Signalsendeanordnung an oder in der Elektrode angeordnet sein, um gemessene Signale aus der Elektrode heraus zu übertragen.

In einer vorteilhaften Ausgestaltung kann der Behälter zumindest bereichsweise die Gegen-elektrode ausbilden. Der Behälter kann etwa aus einem elektrisch leitenden Material hergestellt sein oder innen mit einem elektrisch leitenden Material beschichtet sein.

Um auch eine Messung zu ermöglichen, wenn der Behälter nicht elektrisch leitend ist, kann die Sensoranordnung eine separate Gegenelektrode umfassen. Die Gegenelektrode kann in den Behälter einbringbar ausgestaltet sein oder schon im Behälter fest angebracht sein. Die Gegenelektrode kann beispielsweise stabförmig oder zylindrisch sein. Die Gegenelektrode kann die Elektrode umschließen, um eine einfache Messung zu ermöglichen oder um einen mechanischen Schutz zu ermöglichen.

Die Elektrode kann eine ringförmig geschlossene Abschirmfläche ausbilden, um eine ausreichende Abschirmung zu erzielen. Beispielsweise kann die Elektrode zylindrisch sein. Dadurch ist eine einfache Herstellung und ein einfaches Einführen in den Behälter möglich.

Für eine möglichst einfache Herstellbarkeit und/oder um beispielsweise eine Reinigung oder Wartung zu erlauben, kann die Elektrode teilweise offen sein. Beispielsweise kann sie nach oben hin offen sein und nach unten hin geschlossen sein, um beim Eintauchen den innen liegenden Teil gegen das Füllgut abzudichten.

Die Elektrode kann hermetisch dicht sein, um die innen liegenden Teile zu schützen. Beispielsweise kann ein Schutz nach IP68 oder anderen Normen gegeben sein, also ein Schutz gegen Staub und Wasser.

Die Elektrode kann lebensmittelgeeignet sein, um sie zum Beispiel bei der Lebensmittelproduktion einsetzen zu können. Neben einer Abdichtung kann hier vor allem auch die Wahl des richtigen Materials entscheidend sein.

Um eine kontaktlose Versorgung mit Energie oder eine kontaktlose Übertragung von Signalen zu ermöglichen, kann die Elektrode ein transparentes Fenster aufweisen. Das transparente Fenster kann beispielsweise aus Glas oder Kunststoff bestehen und in eine entsprechende Ausnehmung an einem Körper der Elektrode angeordnet sein.

Die Elektrode kann rohrförmig oder stabförmig sein, um ein besonders leichtes Einführen in den Behälter und eine lineare Charakteristik des Messsignals zu erzielen. Im Inneren eines Rohres kann die Oszillatoranordnung zumindest teilweise angeordnet sein.

Die Sensoranordnung kann eine Auswerteeinheit fassen. Die Auswerteeinheit kann Signal- und/oder Signalausgänge umfassen.

Die Sensoranordnung kann eine Ausgabeeinheit umfassen, beispielsweise eine Anzeige oder einen Bildschirm, um die ermittelten Füllstände anzuzeigen.

Die Sensoranordnung kann einen Verstärker, insbesondere einen Operationsverstärker aufweisen, um eingehende Signale zu verstärken.

Im Folgenden wird die erfindungsgemäße Lösung anhand vorteilhafter Ausgestaltungen mit Bezug auf die Zeichnungen näher erläutert. Die dargestellten Weiterentwicklungen und Ausgestaltungen sind jeweils voneinander unabhängig und können beliebig miteinander kombiniert werden.

Es zeigen:
- Fig. 1: eine schematische Ansicht einer Sensoranordnung zusammen mit einem Behälter;
- Fig. 2: eine schematische Ansicht der Elektrode der Sensoranordnung mit weiteren Bauelementen; und
- Fig. 3: eine schematische Detailansicht der Elektrode.

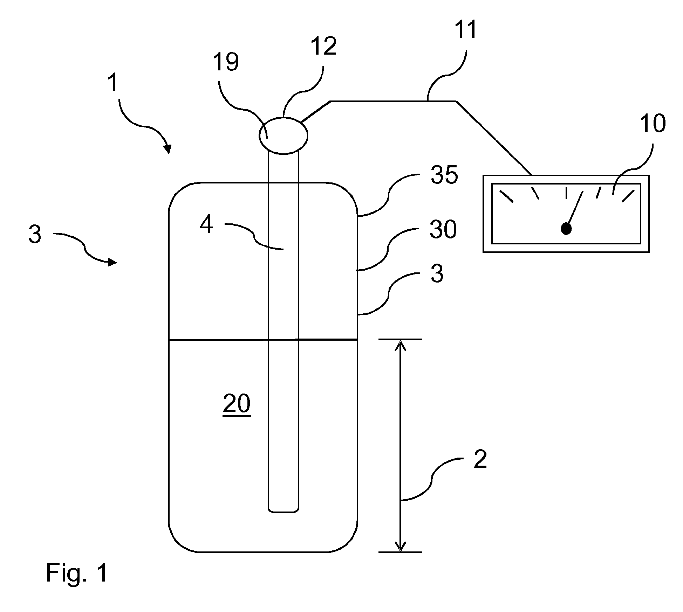

In Fig. 1 ist eine Sensoranordnung 1 zur potentiometrischen Messung einer Füllstandshöhe 2 in einem Behälter 3 gezeigt.

Die Sensoranordnung 1 umfasst eine Elektrode 4, die in den Behälter 3 einbringbar ist. Sie kann zum Beispiel durch eine oben liegende Öffnung des Behälters 3 eingeführt werden. Anschließend kann zum Beispiel ein Kopf 12, in dem sich weitere Elemente der Sensoranordnung 1 befinden können, mit dem Behälter 3 verschraubt werden. Die Elektrode 4 taucht dabei zumindest teilweise in das Füllgut 20 ein.

Als Füllgut 20 können in dem Behälter 3 zum Beispiel Flüssigkeiten vorhanden sein, wie dies in der chemischen Industrie oder in der Lebensmittelindustrie der Fall ist.

Um die Füllstandshöhe 2 zu ermitteln, wird eine Wechselspannung zwischen der Elektrode 4 und der Behälterwand 30, die in diesem Fall die Gegenelektrode 35 für die Messung darstellt, gemessen. Dies kann der Fall sein, wenn der Behälter 3 aus einem elektrisch leitenden Material besteht oder an seiner Innenseite mit einem elektrisch leitenden Material beschichtet ist. Bei einem Behälter 3 aus einem nicht leitenden Material kann eine separate Gegenelektrode 35 in den Behälter eingeführt sein, um die Messung zu ermöglichen.

In Abhängigkeit von der Füllstandshöhe 2 variiert die messbare Spannung zwischen der Elektrode 4 und der Gegenelektrode 35 wie aus dem potentiometrischen Messprinzip vorbekannt. Ebenso bekannt ist, dass beim Einsatz genügend hoher Frequenzen (z. B. 5 kHz) neben dem durch konduktive Leitfähigkeit des Füllgutes hervorgerufenen Messeffektes auch die kapazitive Komponente auswertbar ist, wie dies für elektrisch isolierte Elektroden bekannt ist. Dies erfordert neben dem bekannter weisen hochohmigen und kapazitätsarmen Eingang des Messverstärkers auch konstruktive Maßnahmen, um den Einfluss parasitärer Kapazitäten und Induktivitäten, die sowohl das Messsignal belasten als es auch verfälschen können, so gering wie möglich zu halten. Letzterer Einfluss kommt insbesondere durch die Gleichtakteinkopplung der systemeigenen Wechselspannung, mit der die Elektrode angesteuert wird, durch Bauelemente wie Transformatoren oder Übertrager in Betracht. Bei entsprechend guter Eliminierung der parasitären Kapazitäten und Induktivitäten können mit dem durch die rein kapazitive Wirkung des Füllgutes hervorgerufenen Messeffektes auch zum Beispiel Flüssigkeiten gemessen werden, die keine oder nur eine sehr geringe elektrische Leitfähigkeit besitzen.

In Fig. 1 ist ferner eine Anzeige 10 dargestellt, die durch ein Kabel 11 mit dem Rest der der Sensoranordnung 1 verbunden ist und die Füllstandshöhe 2 im Behälter 3 anzeigt.

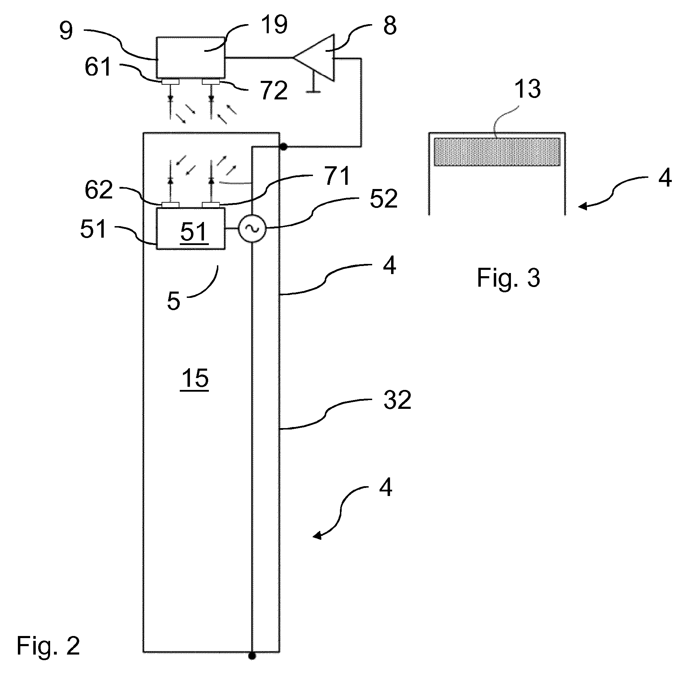

In Fig. 2 ist die Sensoranordnung 1 schematisch genauer dargestellt. Insbesondere ist ein Innenraum 15 gezeigt.

In dem Innenraum 15 ist eine Oszillatoranordnung 5 vorhanden, die eine zur Messung notwendige Wechselspannung erzeugt.

Die Oszillatoranordnung 5 umfasst eine Wechselspannungsquelle 51, die eine Wechselspannung mit einer geringen Amplitude erzeugt. Bei der Wechselspannungsquelle 51 kann es sich beispielsweise um einen Schwingkreis oder um einen Prozessor handeln.

Die Wechselspannungsquelle 51 ist mit einer Transformatoranordnung 52 verbunden, die ebenfalls im Innenraum 15 der Elektrode 4 angeordnet ist. Die Transformatoranordnung 52 dient dazu, die von der Wechselspannungsquelle 51 erzeugte Wechselspannung zu verstärken. Da die Transformatoranordnung 52 im Inneren der Elektrode 4 angeordnet ist, sollte sie sehr kompakt und simpel aufgebaut sein, zum Beispiel auf einer Seite nur eine einzige Windung umfassen und auf der anderen Seite zum Beispiel fünf oder mehr Windungen umfassen.

Sowohl die Wechselspannungsquelle 51 als auch die Transformatoranordnung 52 sind im Innenraum der Elektrode 4 angeordnet. Dadurch sind parasitäre Kapazitäten minimiert. Auf zusätzliche Abschirmungen, die weitere Kapazitäten hinzufügen, kann verzichtet werden. Insbesondere sind die innen liegenden Teile nach außen hin abgeschirmt und können so weder Störsignale aussenden, noch mit außen liegenden Teilen wechselwirken und weitere Kapazitäten erzeugen. Die Messung der oftmals sehr geringen Kapazität des Füllgutes 20 kann deshalb mit einer höheren Genauigkeit erfolgen, insbesondere bei niedrigem Füllstand.

Zur weiteren galvanischen Entkopplung und um weitere parasitäre Kapazitäten niedrig zu halten, wird die zum Betrieb der Wechselspannungsquelle 51 notwendige Energie kontaktlos bereitgestellt. An einem oberen Teil der Sensoranordnung 1 befindet sich eine Energiesendeanordnung 61, beispielsweise eine LED, die Licht aussendet. An der Wechselspannungsquelle 51 ist eine Energieempfangsanordnung 62 angeordnet, die diese Energie empfängt und in elektrische Energie umwandelt. Es kann sich beispielsweise um eine Fotodiode handeln.

In analoger Weise wird ein Signal von der Wechselspannungsquelle 51 nach außen hin übertragen. Dazu ist eine Signalsendeanordnung 71 vorhanden, die mit einer Signalempfangsanordnung 72 wechselwirkt, beispielsweise wieder über Licht. In dem gezeigten Beispiel wird ein Rohsignal mit einer Amplitude und einer Phase zu einer Auswerteeinheit 19 übertragen, eine Auswertung erfolgt in einem darauffolgenden Schritt. Alternativ könnte die Energieübertragung auch durch andere Arten der kontaktlosen Übertragung, beispielsweise durch Induktion, erfolgen.

Zur Verstärkung des Signals ist ein Operationsverstärker 8 vorhanden, der über einen extrem hochohmigen und kapazitätsarmen Eingang mit dem System verbunden ist.

Die Elektrode 4 kann eine ringförmig geschlossene Abschirmfläche 32 ausbilden, um eine möglichst gute Abschirmung zu erzielen. Insbesondere kann die Elektrode hermetisch dicht sein, beispielsweise wenn die Sensoranordnung 1 mit aggressiven Medien wie Säuren verwendet wird. Bei einem Einsatz im Bereich von Lebensmitteln kann die Elektrode 4 auch lebensmittelgeeignet sein.

In anderen Ausgestaltungen kann die Elektrode 4 teilweise offen sein. Dies kann eine Fertigung erleichtern oder die Wartung und Reinigung vereinfachen.

Zur Einkopplung des Lichts, das zur Energieversorgung und zur Signalübertragung benutzt wird, kann die Elektrode 4, wie in Fig. 3 dargestellt, ein transparentes Fenster 13 aufweisen, durch das das Licht durchtreten kann. Das Fenster 13 kann insbesondere hermetisch dicht in einer Wand der Elektrode 4 angebracht sein.

Neben den gezeigten Elementen kann die Sensoranordnung 1 noch weitere Elemente, etwa eine Ausgabeeinheit, eine Steuerung 9 oder ähnliches aufweisen.

## Patentansprüche

1. Sensoranordnung (1) zur potentiometrischen Messung einer Füllstandshöhe (2) in einem Behälter (3), umfassend eine Oszillatoranordnung (5) zur Erzeugung einer Wechselspannung und eine mit der Oszillatoranordnung (5) verbundene, in den Behälter (3) einbringbar ausgestaltete Elektrode (4), wobei die Oszillatoranordnung (5) zumindest teilweise in einem Innenraum (15) der Elektrode (4) angeordnet ist.

2. Sensoranordnung (1) nach Anspruch 1, wobei die Oszillatoranordnung (5) eine Wechselspannungsquelle (51) umfasst und die Wechselspannungsquelle (51) in dem Innenraum (15) der Elektrode (4) angeordnet ist.

3. Sensoranordnung (1) nach Anspruch 1 oder 2, wobei die Oszillatoranordnung (5) eine Transformatoranordnung (52) umfasst und die Transformatoranordnung (52) in dem Innenraum (15) der Elektrode (4) angeordnet ist.

4. Sensoranordnung (1) nach einem der Ansprüche 1 bis 3, wobei die Transformatoranordnung (20) einen ersten Satz von Windungen und einen zweiten Satz von Windungen umfasst und im ersten Satz die Anzahl der Windungen 1 bis 5 beträgt.

5. Sensoranordnung (1) nach einem der Ansprüche 1 bis 4, wobei die Oszillatoranordnung (5) vollständig in dem Innenraum (15) angeordnet ist.

6. Sensoranordnung (1) nach einem der Ansprüche 1 bis 5, wobei die Sensoranordnung (1) eine Energiesendeanordnung (61) und/oder eine Energieempfangsanordnung (62) zur kontaktlosen Übertragung von Energie aufweist.

7. Sensoranordnung (1) nach einem der Ansprüche 1 bis 6, wobei die Sensoranordnung (1) eine Signalsendeanordnung (71) und/oder eine Signalempfangsanordnung (72) zur kontaktlosen Übertragung von Signalen aufweist

8. Sensoranordnung (1) nach einem der Ansprüche 1 bis 7, wobei die Sensoranordnung (1) eine separate Gegenelektrode (35) umfasst.

9. Sensoranordnung (1) nach einem der Ansprüche 1 bis 7, wobei der Behälter (3) zumindest bereichsweise die Gegenelektrode (35) ausbildet.

10. Sensoranordnung (1) nach einem der Ansprüche 1 bis 9, wobei die Elektrode (4) eine ringförmig geschlossene Abschirmfläche (32) ausbildet

11. Sensoranordnung (1) nach einem der Ansprüche 1 bis 10, wobei die Elektrode (4) teilweise offen ist.

12. Sensoranordnung (1) nach einem der Ansprüche 1 bis 10, wobei die Elektrode (4) hermetisch dicht ist.

13. Sensoranordnung (1) nach einem der Ansprüche 1 bis 11, wobei die Elektrode (4) ein transparentes Fenster (13) aufweist.

14. Sensoranordnung (1) nach einem der Ansprüche 1 bis 13, wobei die Elektrode (4) rohrförmig ist.

15. Sensoranordnung (1) nach einem der Ansprüche 1 bis 14, wobei die Sensoranordnung (1) eine Auswerteeinheit (19) umfasst.
